# EUROPEAN PATENT APPLICATION

(11) **EP 3 978 271 A1**
(43) Date of publication of application: **06.04.2022**
(21) Application number: 20814475.8
(22) Date of filing: 14.05.2020
(51) Int. Cl.: B60C 7/16, B60B 21/00

(54) **TIRE**

(30) Priority: 29.05.2019 JP 2019100714; 29.05.2019 JP 2019100720
(71) Applicant: BRIDGESTONE CORPORATION, Chuo-ku Tokyo 104-8340 (JP)
(72) Inventor: KOUNO, Yoshihide, Tokyo 104-8340 (JP)
(74) Representative: Oxley, Robin John George
(86) International application number: PCT/JP2020/019314
(87) International publication number: WO 2020/241285

(57) **Abstract**

A tire includes a plurality of rim members disposed at different positions on a same axis, a plurality of body springs that connect between the respective plurality of rim members, and an interlink member that interlinks the adjacent body springs. Each of the plurality of body springs includes an elastic deformable portion, and latch portions that are provided at both ends of the elastic deformable portion and have a different shape from the elastic deformable portion. The latch portions are latched on the rim members.

## Description

### TECHNICAL FIELD

The disclosure relates to a tire.

### BACKGROUND

Tires including coil springs are conventionally known. For example, Patent Literature (PTL) 1 discloses a tire in which a respective plurality of coil springs are interlaced with other coil springs and secured to annular rims to form a toroidal shape as a whole.

### CITATION LIST

### Patent Literature

PTL 1: WO 2010/138150

### SUMMARY

### (Technical Problem)

However, in a tire as disclosed in PTL 1, in a case in which an elastic deformable portion such as a coil spring comes off from an annular rim, the tire may not be able to maintain its shape and may cease to function as a tire.

It would be helpful to provide a tire in which an elastic deformable portion is reliably joined to a rim member.

### (Solution to Problem)

A tire according to the disclosure is a tire including: a plurality of rim members disposed at different positions on the same axis; a plurality of body springs that connect between the respective plurality of rim members; and an interlink member that interlinks the adjacent body springs, wherein each of the plurality of body springs includes: an elastic deformable portion; and latch portions provided at both ends of the elastic deformable portion, the latch portions having a different shape from the elastic deformable portion, and the latch portions are latched on the rim members.

### (Advantageous Effect)

According to the disclosure, it is possible to provide a tire and a body spring in which an elastic deformable portion is reliably joined to a rim member.

### BRIEF DESCRIPTION OF THE DRAWINGS

In the accompanying drawings:
FIG. 1 is an external perspective view of a tire according to an embodiment of the disclosure;
FIG. 2 is an external perspective view of a wheel portion of FIG. 1;
FIG. 3 is a schematic diagram illustrating an example of a body spring that configures a grounding deformable portion of FIG. 1;
FIG. 4 is a schematic diagram illustrating an example of an aspect of engaging the body springs with a rim member;
FIG. 5 is a cross sectional view along the line A-A of FIG. 4;
FIG. 6 is a cross sectional view along the line B-B of FIG. 4;
FIG. 7 is a schematic diagram of an example of an interlink spring that configures the grounding deformable portion of FIG. 1;
FIG. 8A is a schematic diagram illustrating an example of a method for joining the interlink spring to the body springs;
FIG. 8B is a schematic diagram illustrating the example of the method for joining the interlink spring to the body springs;
FIG. 8C is a schematic diagram illustrating an example of a method for joining the interlink springs to the body springs;
FIG. 9 is a schematic diagram illustrating a variation of a limitation portion;
FIG. 10 is a schematic diagram illustrating a variation of a latch portion;
FIG. 11 is a schematic diagram illustrating a variation of the body springs and the interlink springs;
FIG. 12 is a schematic diagram illustrating a variation of an interlink member; and
FIG. 13 is a schematic diagram illustrating an example of joining the body springs using the interlink members of FIG. 12.

### DETAILED DESCRIPTION

An embodiment of the disclosure will be exemplarily described below with reference to the drawings.

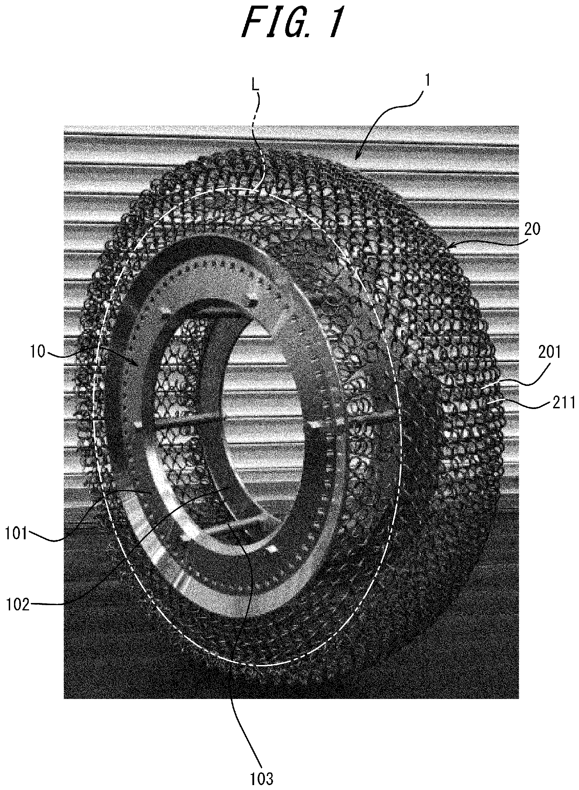

FIG. 1 is an external perspective view of a tire according to an embodiment of the disclosure. As illustrated in FIG. 1, a tire 1 according to the present embodiment includes a wheel portion 10 having a rim portion, and a grounding deformable portion 20 that is deformable while being grounded.

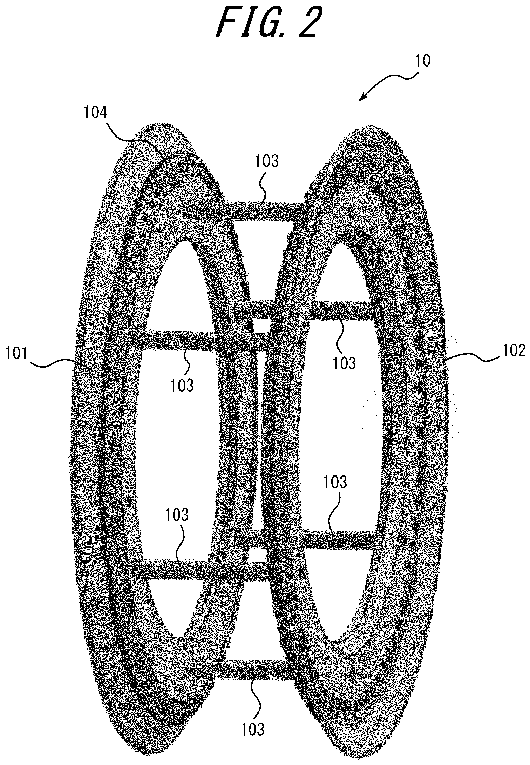

FIG. 2 is an external perspective view of the wheel portion 10 of FIG. 1. The wheel portion 10 is provided with a plurality of rim members. In the present embodiment, as illustrated in FIGS. 1 and 2, the wheel portion 10 is provided with, as the rim members, a first rim member 101 and a second rim member 102. The number of the plurality of rim members provided in the wheel portion 10 does not necessarily have to be two as in the present embodiment, but can be two or more. In the present embodiment, as illustrated in FIG. 2, the wheel portion 10 is further provided with a plurality of connection members 103.

The first rim member 101 and the second rim member 102 are made of metal or resin. The first rim member 101 and the second rim member 102 are disposed at different positions on the same axis. The first rim member 101 and the second rim member 102 are each formed in an annular shape. In the present embodiment, the first rim member 101 and the second rim member 102 are configured to be the same size and shape. However, as long as the tire 1 can perform functions as a tire, the first rim member 101 and the second rim member 102 may be configured in different sizes or shapes. The outer diameter of the first rim member 101 and the second rim member 102 may be determined according to the size of the tire 1 required.

The connection members 103 are members that connect between the first rim member 101 and the second rim member 102. The connection members 103 are made of metal or resin. In the present embodiment, as illustrated in FIG. 2, the wheel portion 10 is provided with six connection members 103, but the number of the connection members 103 provided in the wheel portion 10 is not limited thereto. The plurality of connection members 103 are attached to one side of the annular first rim member 101 and one side of the annular second rim member 102. In this specification, in the wheel portion 10, the side on which the connection members 103 are attached to the first rim member 101 and the second rim member 102 is referred to as an inner side in a tire width direction, and the side on which the connection members 103 are not attached is referred to as an outer side in the tire width direction.

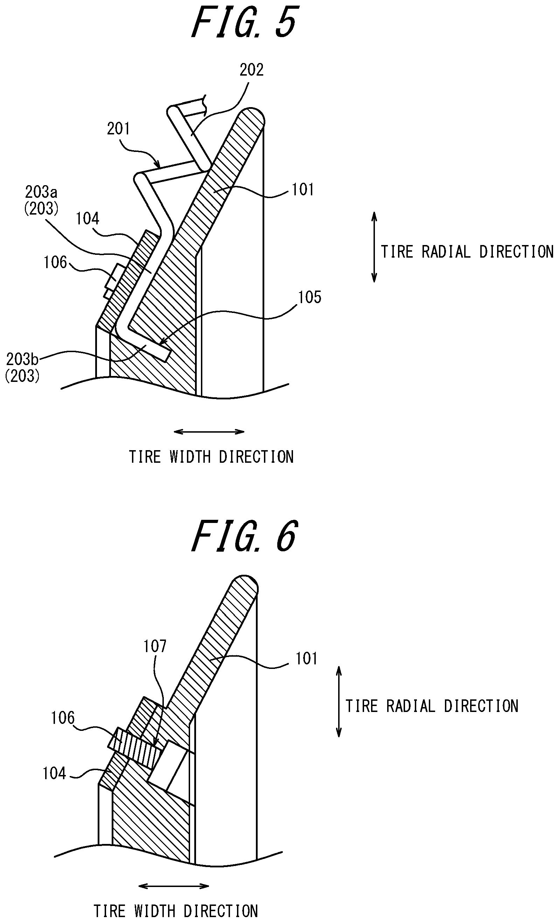

In the present embodiment, the first rim member 101 and the second rim member 102 have, in inner surfaces in the tire width direction, engagement receiving portions 105 (see FIG. 5) in which body springs 201 of the grounding deformable portion 20 are engaged. Details of the engagement receiving portions and an aspect of engagement will be described later. In this specification, "engagement" refers to being fitted together, and "latching" refers broadly to being fastened together, including being fitted together.

In the present embodiment, as illustrated in FIG. 2, a support member 104 is attached to each of the first rim member 101 and the second rim member 102. The support member 104 is a member that maintains a state of engaging the grounding deformable portion 20 in the engagement receiving portions 105 (see FIG. 5). The support members 104 can be secured to the inner side of the first rim member 101 and the second rim member 102 in the tire width direction using, for example, bolts.

In the present embodiment, the grounding deformable portion 20 is configured with members including elastic deformable portions. In the present embodiment, as illustrated in FIG. 1, the grounding deformable portion 20 includes two kinds of members: body springs 201 and interlink springs 211. The body springs 201 and the interlink springs 211 are made of metal.

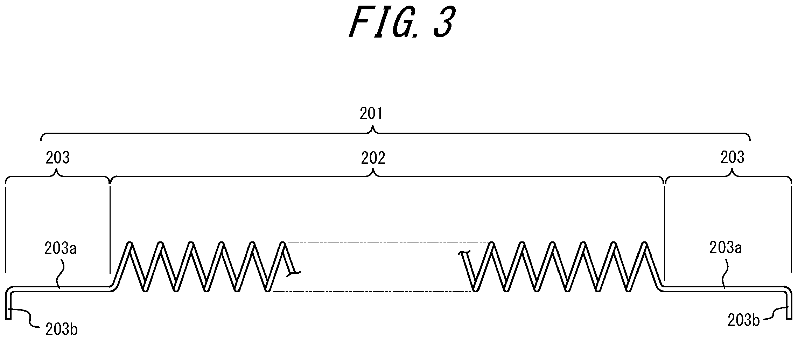

FIG. 3 is a schematic diagram illustrating an example of the body spring 201 that configures the grounding deformable portion 20 of FIG. 1. The body springs 201 connect between the plurality of rim members. In the present embodiment, the body springs 201 connect between the first rim member 101 and the second rim member 102. In a case in which the tire 1 has three or more rim members, the body springs 201 may connect at least one of spaces between the adjacent rim members, though it is preferable that the body springs 201 connect the respective spaces between the adjacent rim members in a manner similar to the manner of connecting between the first rim member 101 and the second rim member 102 described herein. As illustrated in FIG. 3, the body spring 201 has an elastic deformable portion 202 and latch portions 203.

In the present embodiment, the elastic deformable portion 202 is constituted of a coil spring. Here, the coil spring refers to a spring that deforms elastically in response to a load and is coiled (spirally wound) around a predetermined axis. The elastic deformable portion 202 that is made of a suitable material and has appropriate elasticity can be used according to the size and weight of the tire 1, required properties of the grounding deformable portion 20, and the like.

The latch portions 203 are provided at both ends of the elastic deformable portion 202. The latch portions 203 latch the body spring 201 to the wheel portion 10. The latch portions 203 have a different shape from the elastic deformable portion 202. That is, in the present embodiment, the latch portions 203 have a shape different from a coil shape.

In the present embodiment, the latch portions 203 are constituted of members integral with the elastic deformable portion 202. That is, in the present embodiment, as illustrated in FIG. 3, for example, a material composing the elastic deformable portion 202 extends from both the ends of the elastic deformable portion 202 to configure the latch portions 203.

In the present embodiment, as illustrated in FIG. 3, for example, the latch portions 203 include straight portions 203a that are formed in a linear shape and are joined to both the ends of the elastic deformable portion 202. Also in the present embodiment, as illustrated in FIG. 3, for example, the latch portions 203 include, at tip ends of the straight portions 203a, bent portions 203b that are bent with respect to the straight portions 203a. In the present embodiment, the bent portions 203b are bent orthogonally with respect to the straight portions 203a in a side view of the body spring 201 (in a plane containing an axis of the body spring 201).

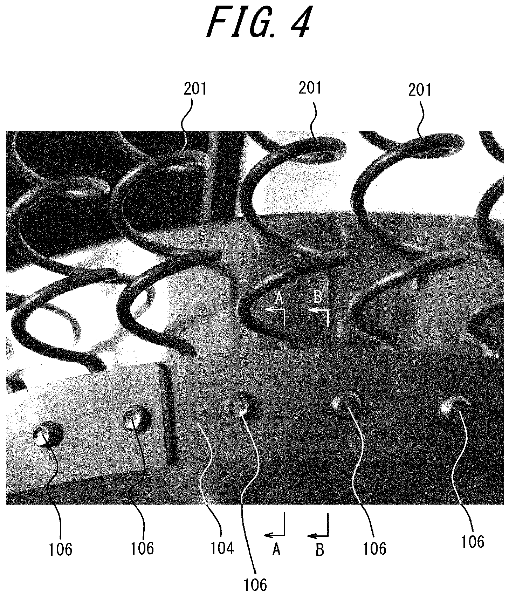

Referring to FIGS. 4 to 6, an aspect of engaging the body springs 201 in the wheel portion 10 according to the present embodiment will be described in detail. One of the latch portions 203 provided at both the ends of the body spring 201 is engaged in the first rim member 101, and the other latch portion 203 is engaged in the second rim member 102. An example of a case in which one of the latch portions 203 is engaged in the first rim member 101 will be described here, but the other latch portion 203 can be engaged in the second rim member 102 in the same manner.

FIG. 4 is a schematic diagram illustrating an example of an aspect of engaging the body springs 201 in the first rim member 101, in which an engagement state of the body springs 201 is viewed from the inner side of the first rim member 101 in the tire width direction. FIG. 4 illustrates only part of the first rim member 101 in which the body springs 201 are engaged, but the body springs 201 are practically engaged, as illustrated in FIG. 4, over the entire circumference of the first rim member 101 in the first rim member 101.

In the present embodiment, as illustrated in FIG. 4, the body springs 201 can be engaged in the first rim member 101 by engaging the latch portions 203 in the engagement receiving portions 105 provided in a surface of the first rim member 101 on the inner side in the tire width direction. In the present embodiment, in particular, the engagement receiving portion 105 is configured as a hole into which the bent portion 203b of the latch portion 203 is insertable. Inserting the bent portions 203b into the holes of the engagement receiving portions 105 allows the body springs 201 to be engaged in the first rim member 101. In a state of engaging the latch portions 203 in the engagement receiving portions 105, the support member 104 is attached to the inner side of the first rim member 101 in the tire width direction in order to firmly secure the engagement state of the latch portions 203.

FIG. 5 is a cross sectional view taken on the line A-A of FIG. 4, and specifically, a cross sectional view of the first rim member 101 at a point including the engagement receiving portion. As illustrated in FIG. 5, the first rim member 101 has the engagement receiving portion 105. In the present embodiment, the engagement receiving portion 105 is configured as a hole into which the bent portion 203b is insertable. In the present embodiment, the engagement receiving portion 105 is configured as a bottomed hole. The length of the hole (depth of the hole) of the engagement receiving portion 105 in an extending direction is preferably longer than the length of the bent portion 203b. As a result, the entire bent portion 203b can be inserted into the engagement receiving portion 105, and the engagement state becomes more stable. However, the engagement receiving portion 105 may be configured as a bottomless hole (through hole).

The shape of cross section of the hole of the engagement receiving portion 105 is not limited as long as the bent portion 203b is insertable thereinto, and may be, for example, an ellipse, an oval, a rectangle, a polygon, or the like. In order to latch (secure) the elastic deformable portion 202 more reliably, it is preferable that the shape and size of cross section of the hole are approximately the same as the shape and size of cross section of the bent portion 203b.

The body spring 201 is arranged such that, in a state of inserting the bent portion 203b into the engagement receiving portion 105, the elastic deformable portion 202 is positioned, except for at least part, at a radially outer side (upper side in FIGS. 5 and 6) of the tire of the annular first rim member 101. In this state, the support member 104 is attached to the inner side (left side in FIGS. 5 and 6) of the first rim member 101 in the tire width direction. The support member 104 is attached, as illustrated in FIG. 5, for example, to such a position as to retain the bent portion 203b inserted into the hole of the engagement receiving portion 105, i.e., such a position as to prevent the bent portion 203b from slipping out of the hole of the engagement receiving portion 105. The support member 104 is preferably attached in such a position as to block the hole of the engagement receiving portion 105 in a state of not inserting the body spring 201. Also, as illustrated in FIG. 5, for example, the support member 104 is secured to the first rim member 101 so as to retain the straight portion 203a of the latch portion 203 on the inner surface of the first rim member 101 in the tire width direction. In this manner, the engagement state of the latch portion 203 is stably secured by the support member 104.

The support member 104 is attached to the first rim member 101 using, for example, bolts 106. FIG. 6 is a cross sectional view of FIG. 4 taken on the line B-B, and specifically, a cross sectional view of the first rim member 101 at a point including the bolt 106 for securing the support member 104. As illustrated in FIG. 6, the support member 104 is secured to the first rim member 101 by the bolt 106. As illustrated in FIG. 4, the support member 104 may be secured to the first rim member 101 at a position between (in the middle of) the two body springs 201 that are engaged in the first rim member 101. That is, in the first rim member 101, one bolt hole 107 for securing the bolt 106 is formed between the two adjacent engagement receiving portions 105 in a circumferential direction of the annular first rim member 101. Thereby, it is possible to secure the support member 104 to the first rim member 101 without interfering with engagement positions of the body springs 201.

The support member 104 may be constituted of a single annular member or as a plurality of divided members that form an annular shape in their entirety. In such a case, the support members 104 may be disposed so as to contact each other at their ends in the circumferential direction, or may be arranged with leaving appropriate clearances. In a case in which the support member 104 is constituted of the plurality of divided members, each member has, for example, the shape of a sector.

In the present embodiment, over the entire circumference of the first rim member 101, one of the latch portions 203 (more specifically, the bent portions 203b) of each of the body springs 201 is engaged in the engagement receiving portion 105 of the first rim member 101, and the support member 104 is secured to the first rim member 101, in the above-described aspect. In this manner, the latch portions 203 are latched on the first rim member 101. In a similar manner, over the entire circumference of the second rim member 102, the other latch portion 203 (more specifically, the bent portion 203b) of each of the body springs 201 is engaged in an engagement receiving portion of the second rim member 102, and the support member 104 is secured to the second rim member 102. In this manner, the latch portions 203 are latched on the second rim member 102. In the present embodiment, one and the other latch portions 203 of one body spring 201 may be engaged, in the first rim member 101 and the second rim member 102, in the engagement receiving portions that are positioned on a straight line in an axial direction of the first rim member 101 and the second rim member 102. In other words, in the present embodiment, two latch portions 203 of one body spring 201 may be secured to the first rim member 101 and the second rim member 102 at the same position with respect to the circumferential direction. However, the two latch portions 203 of the one body spring 201 may not necessarily be secured at the same position in the circumferential direction, with respect to the first rim member 101 and the second rim member 102.

The number and intervals of the body springs 201 to be engaged in the first rim member 101 and the second rim member 102 may be determined as appropriate according to the size and weight of the tire 1, required properties of the grounding deformable portion 20, and the like. The number and intervals of the bolts 106 used to attach the support members 104 to the first rim member 101 and the second rim member 102 may also be determined as appropriate. For example, the bolt 106 does not necessarily have to be attached to every space between two of the engagement receiving portions 105 adjacent in the circumferential direction as in the present embodiment.

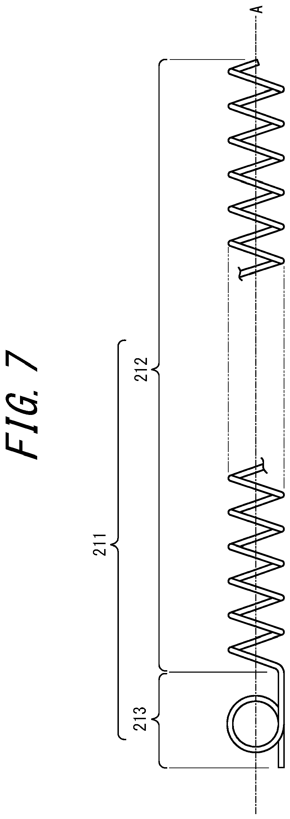

In the tire 1 according to the present embodiment, the plurality of body springs 201, which are engaged in the wheel portion 10 in this manner, are interlinked with the interlink springs 211 to form the grounding deformable portion 20. In other words, in the present embodiment, the interlink spring 211 functions as an interlink member to interlink the adjacent body springs 201. FIG. 7 is a schematic diagram illustrating an example of the interlink spring 211 composing the grounding deformable portion 20 of FIG. 1. In the present embodiment, as illustrated in FIG. 7, the interlink spring 211 has an elastic deformable portion 212 and a limitation portion 213. Specifically, the interlink spring 211 is disposed between the two body springs 201 adjacent in the circumferential direction, which are engaged in the wheel portion 10, and is interlaced with the two body springs 201 so as to be interlinked with the body springs 201.

In the present embodiment, the elastic deformable portion 212 is constituted of a coil spring. The elastic deformable portion 212 that is made of a suitable material and has appropriate elasticity can be used according to the size and weight of the tire 1, required properties of the grounding deformable portion 20, and the like. It is preferable that the diameter of the coil spring constituting the elastic deformable portion 212 is close to the diameter of the coil spring constituting the elastic deformable portion 202 of the body spring 201. Here, the diameter of the coil spring is the diameter of a circumscribed circle in the case of viewing the coil spring from an axial direction, and the same applies hereinafter. The closer the diameter of the coil spring constituting the elastic deformable portion 212 is to the diameter of the coil spring constituting the elastic deformable portion 202 of the body spring 201, the more evenly force is applied to the grounding deformable portion 20 that is formed by interlinking the coil springs constituting the elastic deformable portions 202 with the coil springs constituting the elastic deformable portions 212 as described below. For example, both the diameter of the coil spring constituting the elastic deformable portion 202 and the diameter of the coil spring constituting the elastic deformable portion 212 can be 15 mm to 25 mm, e.g. 20 mm or the like.

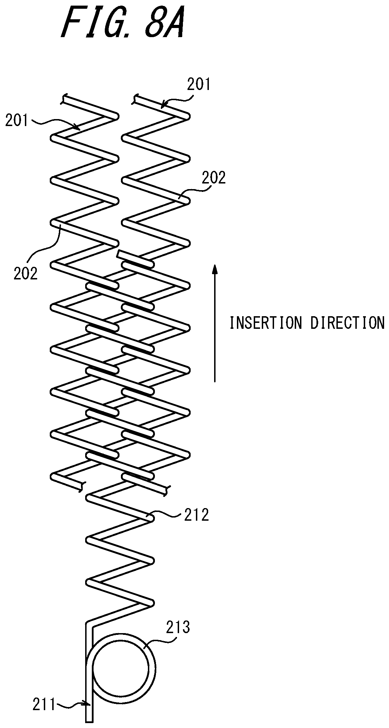

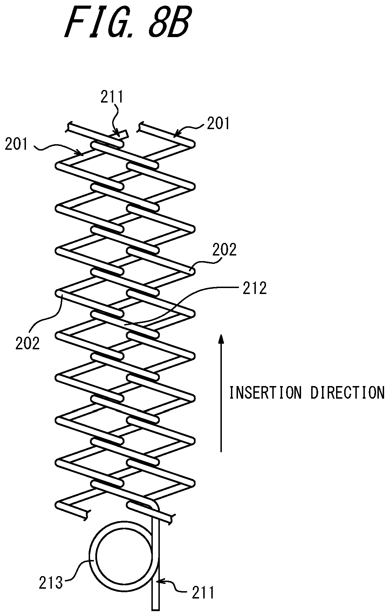

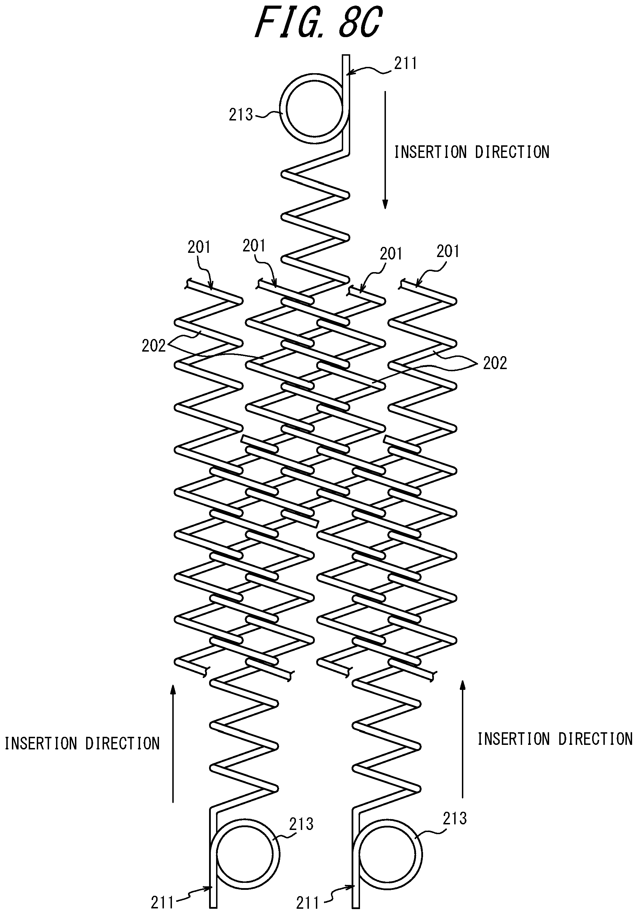

In the present embodiment, the limitation portion 213 is provided at one end of the elastic deformable portion 212. No other mechanism is provided at the other end of the elastic deformable portion 212 where the limitation portion 213 is not provided, and thus the elastic deformable portion 212 has an open shape at the other end. The limitation portion 213 limits displacement of the interlink spring 211, which is to be interlinked with the body springs 201, with respect to the body springs 201. The limitation portion 213 limits displacement of the interlink spring 211 in at least one direction relative to the body springs 201. In this way, by limiting displacement of the interlink spring 211 relative to the body springs 201 by the limitation portion 213, in interlinking the interlink spring 211 with the body springs 201, as described with reference to FIGS. 8A, 8B, and 8C below, the interlinked position of the interlink spring 211 is determined and secured. That is, an interlinked state of the interlink spring 211 with respect to the body springs 201 is positioned and secured. The limitation portion 213 has a different shape from the elastic deformable portion 212. That is, in the present embodiment, the limitation portion 213 has a different shape from a coil shape.

In the present embodiment, the limitation portion 213 is constituted of a member integral with the elastic deformable portion 212. That is, in the present embodiment, as illustrated in FIG. 7, for example, a material of the elastic deformable portion 212 extends from one end of the elastic deformable portion 212 to form the limitation portion 213. In an example illustrated in FIG. 7, the limitation portion 213 has a ring-shaped portion formed with a wire, which forms the elastic deformable portion 212, being bent into a ring shape. The ring-shaped portion is formed so as to have a central axis in a direction intersecting the direction of an axis A of the elastic deformable portion 212. The ring-shaped portion of the limitation portion 213 may be of any size capable of limiting displacement of the interlink spring 211. For example, the ring-shaped portion of the limitation portion 213 may be configured to have a diameter of 0.5 to 1.0 times the diameter of the elastic deformable portion 212.

Here, the function of the limitation portion 213 will be described together with a method for interlinking the interlink spring 211 with the body springs 201. FIGS. 8A and 8B are schematic diagrams for explaining an example of the method for interlinking the interlink spring 211 with the body springs 201.

As illustrated in FIG. 8A, the interlink spring 211 is interlinked with the two adjacent body springs 201 by hooking the elastic deformable portion 212 on the elastic deformable portions 202 of the body springs 201, which are engaged in the wheel portion 10, in such a manner as to be interlaced with the two adjacent body springs 201. Specifically, the interlink spring 211 is interlinked with the body springs 201 so as to restrict the relative displacement between the two body springs 201 adjacent in the circumferential direction. At this time, the interlink spring 211 is gradually interlaced with the two adjacent body springs 201 by being inserted into the body springs 201 in such a manner as to move forward while rotating, from the side of the other end on which the limitation portion 213 is not provided.

As the entire elastic deformable portion 212 of the interlink spring 211 is interlaced with the body springs 201, as illustrated in FIG. 8B, the limitation portion 213 eventually comes into contact with the body spring 201. The limitation portion 213, due to its shape, cannot be interlaced with the body springs 201. Therefore, the interlink spring 211 does not move in an insertion direction beyond the position at which the limitation portion 213 contacts the body spring 201. In particular, the interlink spring 211 does not move forward (move in the insertion direction) after the ring-shaped portion of the limitation portion 213 contacts the body spring 201, even if the interlink spring 211 is attempted to be moved forward while being rotated. Thus, the limitation portion 213 limits displacement of the interlink spring 211 in at least one direction relative to the body springs 201. In this manner, the limitation portion 213 positions and secures an interlinked state of the interlink spring 211 with respect to the body springs 201. In addition, the interlink spring 211 interlinked with the body springs 201 is prevented from coming off from the body springs 201.

At least one of the two ends of the interlink spring 211 is not secured to the first rim member 101 and the second rim member 102. In the present embodiment, neither of the ends of the interlink spring 211 is secured to the first rim member 101 and the second rim member 102. In other words, in the present embodiment, the interlink spring 211 is not secured at either end. However, only one of the ends of the interlink spring 211 may be secured to the first rim member 101 or the second rim member 102. In this case, the other end of the interlink spring 211, which is opposite to the one end of the interlink spring 211 on which the limitation portion 213 is provided, is secured to the first rim member 101 or the second rim member 102.

In the present embodiment, all the body springs 201, which are engaged in the wheel portion 10, are interlinked with the interlink springs 211 each disposed between the two adjacent body springs 201. In the present embodiment, the tire 1 is configured in this manner. In other words, in the present embodiment, every body spring 201 of the grounding deformable portion 20 of the tire 1 is interlinked with the two interlink springs 211, and every interlink spring 211 of the grounding deformable portion 20 of the tire 1 is interlinked with the two body springs 201. Accordingly, the interlink springs 211 are each interlinked between the two adjacent body springs 201, so even in the case of applying a load to the tire 1, the distance between the body springs 201 does not widen too much, and the tire 1 can easily maintain its function as a tire.

At this time, the limitation portions 213 can limit displacement of the interlink springs 211 in at least one direction relative to the body springs 201 in the tire 1, so that the interlink springs 211 interlinked with the body springs 201 are prevented from coming off from the body springs 201. Therefore, the interlink springs 211 are mainly located in a grounding area of the tire 1, and are not located in the vicinity of secured positions between the first rim member 101 and the body springs 201 and between the second rim member 102 and the body springs 201. As a result, the elastic deformable portions 202 of the body springs 201 and the elastic deformable portions 212 of the interlink springs 211 are located in the grounding area of the tire 1, while only the elastic deformable portions 202 of the body springs 201 are located in the vicinity of the secured positions between the first rim member 101 and the body springs 201 and between the second rim member 102 and the body springs 201. Therefore, according to the tire 1 of the present embodiment, the elastic deformable portions 202 of the body springs 201 and the elastic deformable portions 212 of the interlink springs 211 serve to prevent a reduction in load durability performance of the tire 1, while a congested state of the elastic deformable portions 202 at the secured positions to the first rim member 101 and the second rim member 102 is improved.

The interlink spring 211 that joins the two body springs 201 can be inserted from the side of the first rim member 101 or from the side of the second rim member 102 in the axial direction of the wheel portion 10 (i.e. the direction of a rotational axis of the tire 1). It is preferable that half of the plurality of interlink springs 211 in the tire 1 are inserted from the side of the first rim member 101, and the other half thereof are inserted from the side of the second rim member 102. This means that the limitation portions 213 of the interlink springs 211 are evenly arranged on both sides in the axial direction of the tire 1, thus easily striking a balance of the tire 1 and preventing the limitation portions 213 from being congested in only one direction in the axial direction of the tire 1. In particular, the plurality of interlink springs 211 are more preferably inserted such that, as illustrated as an example in FIG. 8C, the interlink springs 211 that are adjacent to each other in the circumferential direction of the grounding deformable portion 20 are inserted from different directions. This further facilitates striking a balance of the tire 1.

The tire 1 may also be provided with a connection member that connects the ring-shaped portions of the limitation portions 213 of the plurality of interlink springs 211. The connection member is constituted of a wire, for example. For example, suppose that half of the plurality of interlink springs 211 are inserted from the side of the first rim member 101 and the other half thereof are inserted from the side of the second rim member 102. In this case, the limitation portions 213 of the interlink springs 211 inserted from the side of the first rim member 101 are located on the side of the first rim member 101, and the limitation portions 213 of the interlink springs 211 inserted from the side of the second rim member 102 are located on the side of the second rim member 102. In this case, the tire 1 may have two wires, that is, a wire for connecting the ring-shaped portions of the plurality of limitation portions 213 located on the side of the first rim member 101 and a wire for connecting the ring-shaped portions of the plurality of limitation portions 213 located on the side of the second rim member 102. The wire for connecting the ring-shaped portions of the plurality of limitation portions 213 located on the side of the first rim member 101 is provided, for example, along the circumferential direction of the wheel portion 10 so as to pass through central portions (openings formed by the ring-shaped portions) of all the ring-shaped portions of the plurality of limitation portions 213 located on the side of the first rim member 101. Similarly, the wire for connecting the ring-shaped portions of the plurality of limitation portions 213 located on the side of the second rim member 102 is provided, for example, along the circumferential direction of the wheel portion 10 so as to pass through central portions of all the ring-shaped portions of the plurality of limitation portions 213 located on the side of the second rim member 102. Such a wire is formed in a circular shape, for example, and therefore can connect the ring-shaped portions of the limitation portions 213 by passing through the central portions of the ring-shaped portions of the limitation portions 213. Thus, the provision of the wires, which pass through the ring-shaped portions of the plurality of limitation portions 213, limits displacement of the relative positions of the limitation portions 213. As a result, the interlink springs 211 that are interlinked with the body springs 201 are further prevented from coming off from the body springs 201.

However, the connection member for connecting the ring-shaped portions of the plurality of limitation portions 213 of the plurality of interlink springs 211 need not necessarily be configured to pass through the ring-shaped portions of the plurality of limitation portions 213 as described above, and the limitation portions 213 may be connected to each other by any form. In this case, for example, the connection member may be secured to each of the ring-shaped portions of the plurality of limitation portions 213 to be connected, thereby connecting the ring-shaped portions of the plurality of limitation portions 213. By providing at least the wire for connecting the limitation portions 213 of the plurality of interlink springs 211, displacement of the relative positional relationship between the interlink springs 211 connected by the wire is limited.

In the above embodiment, it is described that the limitation portion 213 is formed in a ring shape having a central axis in a direction intersecting the direction of the axis A of the elastic deformable portion 212, but the shape of the limitation portion 213 is not limited thereto. The limitation portion 213 may have any configuration capable of limiting displacement of the interlink spring 211 in at least one direction relative to the body springs 201.

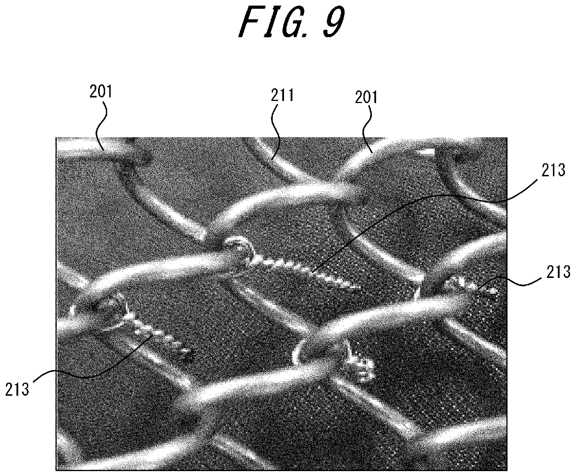

In the above embodiment, it is described that the limitation portion 213 is constituted of a member integral with the elastic deformable portion 212, but the limitation portion 213 does not necessarily have to be constituted of a member integral with the elastic deformable portion 212. For example, as schematically illustrated in FIG. 9, a limitation portion 213 that is constituted of a member different from and independent of the interlink spring 211 may limit displacement of the interlink spring 211 relative to the body spring 201. In the example illustrated in FIG. 9, the limitation portion 213 is configured as a member different from and independent of the interlink spring 211, for limiting displacement of a contact point between the body spring 201 and the interlink spring 211 that are interlaced with each other. In this case, it is easy to freely select a point at which displacement of the interlink spring 211 is limited.

The length of the interlink spring 211 may be determined in appropriate according to the size and weight of the tire 1, the required properties of the grounding deformable portion 20, and the like. The interlink spring 211 is preferably configured to have the elastic deformable portion 212 that is shorter than the length of the elastic deformable portion 202 of the body spring 201. The interlink spring 211 preferably has a length such that the elastic deformable portion 212 extends over the entirety in the tire width direction. In other words, the interlink spring 211 preferably has the elastic deformable portion 212 that extends over at least a maximum width of the tire 1 in the width direction of the tire 1. In a case in which the interlink springs 211 extend over the maximum width of the tire, the positions of the ends of the interlink springs 211 in the width direction are indicated by the double-dotted line L in FIG. 1. In FIG. 1, however, the double-dotted line L indicates only the position of one of both ends of every interlink spring 211. The position of the other end of every interlink spring 211 is symmetrical about a plane that is orthogonal to the rotational axis of the tire 1 and centered in the width direction of the tire 1. By extending the elastic deformable portions 212 of the interlink springs 211 over the entirety in the width direction of the tire 1, the elastic deformable portions 202 of the body springs 201 are interlinked with the elastic deformable portions 212 of the interlink springs 211 in at least the grounding area, thereby improving durability.

The elastic deformable portions 212 of the interlink springs 211 preferably extend over an entire crown portion of the tire 1. The crown portion is a portion that is, in the grounding deformable portion 20 of the tire 1, inflated outwardly in a radial direction of the tire 1 from side portions formed on approximately the same planes as the planes of the first rim member 101 and the second rim member 102. The elastic deformable portions 212 of the interlink springs 211 further preferably extend to buttress portions of the tire 1. The buttress portions are portions between each of the side portions and the crown portion in the grounding deformable portion 20. In the grounding deformable portion 20, a portion interlinked with the interlink springs 211 is hard to deform due to restraining force of the interlink springs 211, and portions not interlinked with the interlink springs 211 are easy to deform because the restraining force of the interlink springs 211 does not work. By arranging the elastic deformable portions 212 in the crown portion and the buttress portions, as described above, the deformation of the crown portion and the buttress portions can be suppressed. On the other hand, by preventing the restraining force of the interlink springs 211 from working on the side portions, vibration at the time of grounding of the tire 1 can be absorbed.

Thus, according to the tire 1 of the present embodiment, each of the plurality of body springs 201, which configure the grounding deformable portion 20, has the elastic deformable portion 202 and the latch portions 203 that are provided at both ends of the elastic deformable portion 202 and have a shape different from the elastic deformable portion 202. The latch portions 203 are latched on the first rim member 101 and the second rim member 102. Accordingly, the body springs 201 can be reliably joined to the first rim member 101 and the second rim member 102. This effect, for example, prevents the body springs 201 from coming off from the first rim member 101 and the second rim member 102, even if the tire 1 is used in a special environment. Also, for example, if the elastic deformable portions 202 of the body springs 201 are directly joined to the first rim member 101 and the second rim member 102, the elastic deformable portions 202 may easily fall off from the first rim member 101 and the second rim member 102, depending on a method of joining or due to the wearing away of the elastic deformable portions 202. In contrast to this, in the present embodiment, such a fear is less likely to occur because the latch portions 203 of a different shape from the elastic deformable portions 202 are latched. Furthermore, even in a case in which the tire 1 according to the present embodiment is used, for example, on a lunar surface where temperature largely varies, the body springs 201 are engaged in the engagement receiving portions 105 of the first rim member 101 and the second rim member 102, so the occurrence of thermal expansion or thermal contraction in the first and second rim members 101 and 102 or the body springs 201 does not cause the body springs 201 to come off from the first rim member 101 and the second rim member 102, thus facilitating maintaining the form and function of the tire 1.

In addition, in a case in which the first rim member 101 and the second rim member 102 have the engagement receiving portions 105, and the latch portions 203 of the body springs 201 are latched on the engagement receiving portions 105, as in the present embodiment, the body springs 201 can be more reliably joined to the first rim member 101 and the second rim member 102.

In addition, in a case in which a latched state of the latch portions 203 is maintained using the support members 104, as in the present embodiment, the body springs 201 are further prevented from coming off from the first rim member 101 and the second rim member 102. Therefore, the plurality of body springs 201 can be more reliably engaged in the engagement receiving portions 105 of the first rim member 101 and the second rim member 102.

In the above embodiment, it is described that the latch portions 203 of the body spring 201 is configured to each include the straight portion 203a and the bent portion 203b disposed at the tip end of the straight portion 203a. However, the configuration of the latch portions 203 is not necessarily limited thereto. The latch portions 203 may have any shape that is different from the shape of the elastic deformable portion 202 and is capable of being latched on the first rim member 101 and the second rim member 102. The engagement receiving portions 105 of the first rim member 101 and the second rim member 102 may also have any configuration, corresponding to the configuration of the latch portions 203. For example, the latch portions 203 may be formed in a linear shape. In this case, the first rim member 101 and the second rim member 102 may be provided with engagement receiving portions in which the linear latch portions 203 can be engaged, or the latch portions 203 may simply be secured by the support members 104.

The latch portions 203 are not limited to the examples described herein, and may have any configuration capable of latching the body spring 201 on the first rim member 101 and the second rim member 102. For example, the latch portions 203 may be each formed in a hook shape.

For example, in the above embodiment, it is described that the bent portion 203b of the latch portion 203 of the body spring 201 is bent orthogonally to the straight portion 203a. However, the bent portion 203b does not necessarily have to be orthogonal to the straight portion 203a. The bent portion 203b may be bent at a predetermined angle with respect to the straight portion 203a. In this case, the engagement receiving portion 105 may be formed as a hole provided in a direction that matches the angle of bending of the bent portion 203b.

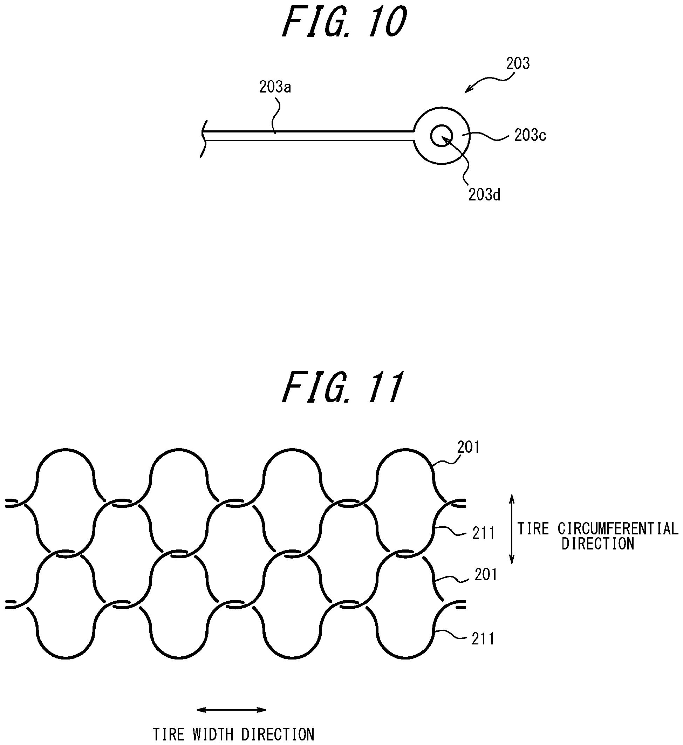

As illustrated in FIG. 10, the latch portion 203 of the body spring 201 may be configured to include, for example, a straight portion 203a and a ring portion 203c disposed at a tip end of the straight portion 203a. The ring portion 203c is formed in an annular shape having a through hole 203d in its center. In this case, the engagement receiving portion 105 may be configured to be, for example, a projection that can penetrate the through hole 203d. In this case, by penetrating the projection of the engagement receiving portion 105 through the through hole 203d of the ring portion 203c of the latch portion 203, the latch portion 203 can be latched on the engagement receiving portion 105.

In the above embodiment, it is described that the elastic deformable portion 202 of the body spring 201 and the elastic deformable portion 212 of the interlink spring 211 are each constituted of a coil spring. However, the elastic deformable portion 202 of the body spring 201 and the elastic deformable portion 212 of the interlink spring 211 do not necessarily have to be constituted of a coil spring. For example, as illustrated in FIG. 11, the elastic deformable portion 202 of the body spring 201 and/or the elastic deformable portion 212 of the interlink spring 211 may be each configured to include a two-dimensional (i.e., extending along approximately the same plane) corrugated metal member, instead of a coil spring. FIG. 11 illustrates an example of a case in which the elastic deformable portions 202 and the elastic deformable portions 212 are each formed in a two-dimensional corrugated shape. The corrugated metal member may be, for example, in the shape of a linked semicircle or a sinusoidal waveform. Even in this case, the body springs 201 and the interlink springs 211 can be interlinked by interlacing the corrugated metal members.

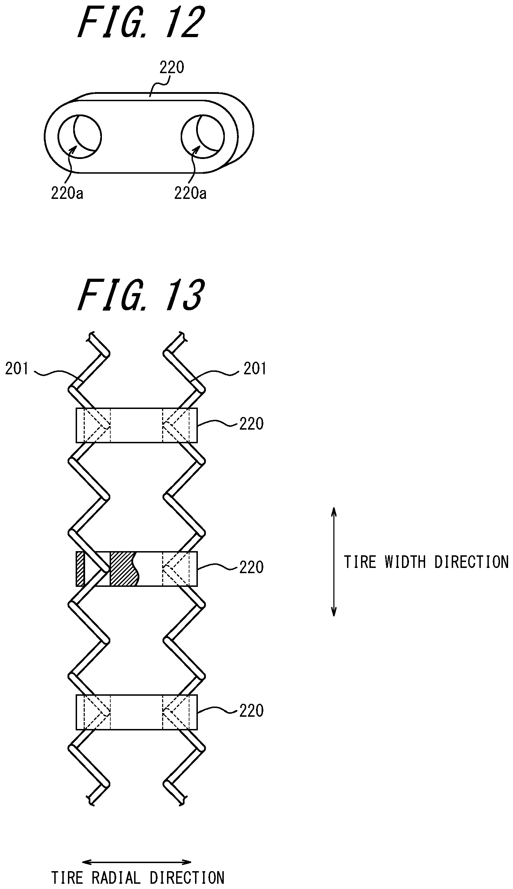

In the above embodiment, it is described that the interlink springs 211 are each interlaced with the two adjacent body springs 201, but the tire 1 does not necessarily have to have the interlink springs 211. For example, the tire 1 may have an interlink member 220 having two through holes 220a, as illustrated in FIG. 12, and the interlink member 220 may be used to interlink the two adjacent body springs 201. The two through holes 220a of the interlink member 220 each have a size sufficient to pass the body spring 201 therethrough. In this case, one body spring 201 passes through one of the two through holes 220a that the interlink member 220 has, and one body spring 201 adjacent to the one body spring 201 passes through the other. As illustrated in FIG. 13, by passing the interlink members 220 through the body springs 201 at a plurality of points, the two adjacent body springs 201 can be interlinked using the interlink members 220 at the plurality of points separated in the tire width direction. In FIG. 13, part of each of the interlink members 220, which interlink the two body springs 201, is illustrated in cross section so that a state of penetration of the body springs 201 through the through holes 220a can be seen. In this manner, the tire 1 can also be configured by using the interlink members 220, instead of the interlink springs 211.

Although the present disclosure has been described based on the drawings and examples, it is noted that a person skilled in the art can easily make various variations and modifications based on the present disclosure. Accordingly, it is noted that these variations and modifications are included in the scope of the present invention. For example, the functions and the like included in each of components and the like can be rearranged so as not to be logically inconsistent, and a plurality of components can be combined into one or divided.

### REFERENCE SIGNS LIST

- 1: tire
- 10: wheel portion
- 20: grounding deformable portion
- 101: first rim member
- 102: second rim member
- 103: connection member
- 104: support member
- 105: engagement receiving portion
- 106: bolt
- 107: bolt hole
- 201: body spring
- 202, 212: elastic deformable portion
- 203: latch portion
- 203a: straight portion
- 203b: bent portion
- 203c: ring portion
- 203d: through hole
- 211: interlink spring
- 213: limitation portion
- 220: interlink member
- 220a: through hole
- A: axis

## Claims

1. A tire comprising:
a plurality of rim members disposed at different positions on a same axis;
a plurality of body springs that connect between the respective plurality of rim members; and
an interlink member that interlinks the adjacent body springs, wherein
each of the plurality of body springs includes:
an elastic deformable portion; and
latch portions provided at both ends of the elastic deformable portion, the latch portions having a different shape from the elastic deformable portion, and
the latch portions are latched on the rim members.

2. The tire according to claim 1, wherein
the plurality of rim members have engagement receiving portions in which the latch portions can be engaged, and
the latch portions are engaged in the engagement receiving portions.

3. The tire according to claim 2, further comprising a support member that supports an engagement state of the latch portions engaged in the engagement receiving portions.

4. The tire according to claim 2 or 3, wherein the elastic deformable portion and the latch portions are constituted of an integral member.

5. The tire according to any one of claims 2 to 4, wherein the latch portions each include a straight portion formed in a linear shape.

6. The tire according to claim 5, wherein the latch portions each include a bent portion bent with respect to the straight portion, at a tip end of the straight portion.

7. The tire according to claim 6, wherein the engagement receiving portions are each configured to include a hole into which the bent portion is insertable.

8. The tire according to any one of claims 1 to 7, wherein
the interlink member is configured as an interlink spring having an elastic deformable portion and a limitation portion provided at one end of the elastic deformable portion,
neither end of the interlink spring is secured to the plurality of rim members, and
the limitation portion limits displacement of the interlink spring in one direction with respect to the body springs.

9. The tire according to any one of claims 1 to 7, wherein
the interlink member is constituted of a plurality of interlink springs interlinked with the body springs so as to limit relative displacement between the plurality of body springs,
the interlink member further has a limitation portion that limits displacement of the interlink spring with respect to the body springs,
at least one of both ends of the interlink spring is not secured to the plurality of rim members.
